# EUROPEAN PATENT APPLICATION

(11) **EP 4 407 430 A1**
(43) Date of publication of application: **31.07.2024**
(21) Application number: 22879834.4
(22) Date of filing: 10.05.2022
(51) Int. Cl.: G06F 3/06

(54) **DATA SYSTEM, DATA ACCESS METHOD AND APPARATUS, AND DATA PROCESSING UNIT**

(30) Priority: 14.10.2021 CN 202111196002; 21.12.2021 CN 202111586023
(71) Applicant: Huawei Technologies Co., Ltd., Shenzhen, Guangdong 518129 (CN)
(72) Inventor: LUO, Xianqiang, Shenzhen, Guangdong 518129 (CN); MA, Teng, Shenzhen, Guangdong 518129 (CN); XIANG, Weijie, Shenzhen, Guangdong 518129 (CN)
(74) Representative: Epping - Hermann - Fischer
(86) International application number: PCT/CN2022/091991
(87) International publication number: WO 2023/060884

(57) **Abstract**

A data system, a data access method and apparatus, and a data processing unit are provided in this application. A first compute node sends a first data access request to a first DPU. The first data access request is used to access first data in a storage device. After receiving the first data access request, the first DPU first determines whether the first data is cached in a cache of the first DPU. If the first data is cached in the cache of the first DPU, the first DPU sends the cached first data to the first compute node. If the first data is not cached in the cache of the first DPU, the first DPU obtains the first data from the storage device, and sends the first data to the first compute node. When the first compute node needs to access the first data in the storage device, the first DPU may directly feed back the cached first data to the first compute node. This can shorten an access path of the first data, reduce a data access delay, and improve data access efficiency.

## Description

### CROSS-REFERENCE TO RELATED APPLICATIONS

This application claims priority to Chinese Patent Application No. 202111196002.9, filed with the China National Intellectual Property Administration on October 14, 2021 and entitled "DATA ACCESS METHOD", which is incorporated herein by reference in its entirety; and this application claims priority to Chinese Patent Application No. 202111586023.1, filed with the China National Intellectual Property Administration on December 21, 2021 and entitled "DATA SYSTEM, DATA ACCESS METHOD AND APPARATUS, AND DATA PROCESSING UNIT", which is incorporated herein by reference in its entirety.

### TECHNICAL FIELD

This application relates to the field of storage technologies, and in particular, to a data system, a data access method and apparatus, and a data processing unit.

### BACKGROUND

Currently, when data in a storage system needs to be accessed, a user may trigger, by using client software deployed on a user side, a compute node on which the client software is located to generate a data access request, and a network interface card on the compute node sends the data access request to a node in the storage system by using a network or an optical fiber. After receiving the data access request, the node in the storage system may access stored data based on the data access request.

It can be learned from the foregoing process that a data access path needs to be extended to the storage system by using the network or the optical fiber, and the data access path is long and a delay is high.

### SUMMARY

This application provides a data system, a data access method and apparatus, and a data processing unit, to shorten a data access path and reduce a delay.

According to a first aspect, an embodiment of this application provides a data system. The data system includes a first compute node, a storage device, and a first DPU, and the first DPU is separately connected to the first compute node and the storage device.

The first compute node may send a first data access request (corresponding to a first data read request in this embodiment of this application) to the first DPU. The first data access request is used to access first data in the storage device. After receiving the first data access request, the first DPU may first determine whether the first data is cached in a cache of the first DPU. After determining that the first data is cached in the cache of the first DPU, the first DPU sends the first data in the cache to the first compute node. If the first data is not cached in the cache of the first DPU, the first DPU may obtain the first data from the storage device, and send the first data to the first compute node.

By using the foregoing system, when the first compute node needs to access the first data in the storage device, the first DPU may directly feed back the cached first data to the first compute node. This can shorten an access path of the first data to some extent, reduce a data access delay effectively, and improve data access efficiency.

In a possible implementation, before the first DPU receives the first data access request, the first DPU may first cache the first data. A manner and a scenario in which the first DPU caches the first data are not limited in this embodiment of this application. For example, the first compute node may send a second data access request to a second DPU. The second data access request is used to access the first data in the storage device. After receiving the second data access request, if determining that the first data is not cached in the cache, the second DPU may obtain the first data from the storage device based on the second data access request, cache the obtained first data in the cache of the first DPU, and may further feed back the first data to the first compute node.

By using the foregoing system, the first DPU may cache the first data, so that when the first compute node subsequently accesses the first data again, the first DPU may directly feed back the first data to the first compute node.

In a possible implementation, the first DPU may further send a first lock request (corresponding to a read lock authorization request in this embodiment of this application) to the storage device. The first lock request requests a first distributed lock, the first distributed lock represents that the first DPU has a cache permission on the first data, and the first distributed lock corresponds to a read lock in this embodiment of this application.

After receiving the first lock request, the storage device authorizes the first distributed lock for the first DPU in response to the first lock request. For example, the storage device may send a read lock authorization message to the first DPU, to notify the first DPU to uniformly authorize the first distributed lock.

After obtaining the first distributed lock authorized by the storage device, the first DPU may cache the first data in the cache of the first DPU.

By using the foregoing system, the first DPU can ensure consistency of the first data by applying for a manner of the first distributed lock, and ensure consistency between the first data and data stored in the storage device.

In a possible implementation, the data system may further include a second compute node and a second DPU, and the second DPU is separately connected to the second compute node and the storage device. In the data system, the second DPU may notify the storage device to update the first data. A specific manner is as follows:
The second compute node may send a third data access request (corresponding to a data write request in this embodiment of this application) to the second DPU. The third data access request is used to update the first data. After receiving the third data access request, the second DPU may request, based on the third data access request, the storage device to update the first data. For example, the second DPU may send the third data access request to the storage device.

The storage device may recall a distributed lock that is for the first data and that is in another DPU except the second DPU, in other words, recall a distributed lock that is for the first data and that has a conflict, for example, recall the first distributed lock of the first DPU. After recalling the distributed lock that is for the first data and that has the conflict, the storage device may update the first data based on a request of the second DPU.

By using the foregoing system, when updating the first data, the storage device needs to recall the distributed lock that is for the first data and that has the conflict, and updates the first data only after the recall is completed. If the first data is updated without recalling the distributed lock that is for the first data and that is in the another DPU, the another DPU feeds back the first data as updated data to a compute node. It can be learned that deployment of the distributed lock can effectively ensure consistency of the first data, to ensure that the data can be accurately and effectively fed back to the compute node.

In a possible implementation, the data system may further include a second compute node and a second DPU, and the second DPU is separately connected to the second compute node and the storage device. In the data system, the second DPU may alternatively update the first data itself. A specific manner is as follows:
The second DPU may send a second lock request (corresponding to a write lock authorization request in this embodiment of this application) to the storage device. The second lock request requests a second distributed lock, the second distributed lock represents that the second DPU has an update permission on the first data, and the second distributed lock is a write lock.

After receiving the second lock request, the storage device may authorize the second distributed lock for the second DPU in response to the second lock request. For example, a write lock authorization message is sent to the second DPU, to notify the second DPU to agree to authorize the write lock.

After the storage device authorizes the second distributed lock, if the second compute node sends a fourth data access request to the second DPU, where the fourth data access request is used to update the first data, after the second DPU receives the fourth data access request, the second DPU may update the first data based on the fourth data access request. For example, the second DPU may obtain the first data and update the first data.

It should be noted that the second DPU is merely used as an example for description herein. Actually, an operation of the second DPU may be performed by the another DPU in the data system, for example, the first DPU.

By using the foregoing system, the second DPU may update locally cached first data in time by applying for the write lock. Because the first data is updated in time, it can also be ensured that when the second compute node subsequently accesses updated first data again, the second DPU may accurately feed back the updated first data.

In a possible implementation, the data system further includes a third compute node and a third DPU, and the third DPU is separately connected to the third compute node and the storage device. The third compute node may send a fifth data access request (corresponding to a second data read request in this embodiment of this application) to the second DPU. The fifth data access request is used to access the first data in the storage device. After receiving the fifth data access request, the third DPU may first determine a cache location of the first data. For example, the third DPU may determine, through the storage device, that the first data is stored in the cache of the first DPU, or determine, by interacting with the first DPU, that the first data is stored in the cache of the first DPU. After determining that the first data is stored in the cache of the first DPU, the third DPU may obtain the first data from the first DPU.

By using the foregoing system, a global cache may be formed between DPUs connected to different compute nodes, to ensure that various cached data may be transmitted between the DPUs, and further, a data access path may be shortened, and a data access delay may be reduced.

According to a second aspect, an embodiment of this application provides a data access method. The method may be performed by a DPU. For beneficial effects, refer to related descriptions of the first aspect. Details are not described herein again. The DPU is connected to a compute node and a storage device. In the method, the DPU may receive a first data access request sent by the compute node. The first data access request is used to access first data in the storage device. After receiving the first data access request, the DPU may first determine whether the first data is cached in a cache of the DPU. When determining that the first data is cached in the cache of the DPU, the DPU sends the first data in the cache to the compute node. When determining that the first data is not cached in the cache of the DPU, the DPU obtains the first data from the storage device, and feeds back the obtained first data to the compute node.

In a possible implementation, before the DPU receives the first data access request, the DPU may first cache the first data. A manner and a scenario in which the DPU caches the first data are not limited in this application. For example, before sending the first data access request, the compute node may send a second data access request. The second data access request is used to access the first data in the storage device. After receiving the second data access request, the DPU may obtain the first data from the storage device based on the second data access request, cache the first data in the cache of the DPU, and feed back the first data to the compute node.

In a possible implementation, the DPU may further send a first lock request to the storage device. The first lock request requests a first distributed lock, and the first distributed lock represents that the DPU has a cache permission on the first data. After obtaining the first distributed lock from the storage device, the DPU may cache the first data in the cache of the DPU.

In a possible implementation, the DPU may further receive a third data access request from the compute node. The third data access request is used to update the first data; and the DPU may request, based on the third data access request, the storage device to update the first data.

In a possible implementation, the storage device may recall the first distributed lock in the DPU. For example, the storage device may send an indication (the indication corresponds to a read lock recall request in this embodiment of this application) to the DPU, and the DPU may further delete the first distributed lock and delete the cached first data based on the indication of the storage device.

In a possible implementation, the DPU may further send a second lock request to the storage device. The second lock request requests a second distributed lock, and the second distributed lock represents that the DPU has an update permission on the first data. After the DPU further obtains the second distributed lock from the storage device, if the DPU receives a fourth data access request from the compute node, the fourth data access request is used to update the first data. The DPU may update the first data based on the fourth data access request.

In a possible implementation, DPUs may interact with each other to request data from each other. For example, the DPU may send the first data to another DPU at a request of the another DPU.

According to a third aspect, an embodiment of this application further provides a data processing apparatus. The data processing apparatus may be deployed on a data processing unit, and has a function of implementing behavior of the data processing unit in the method instance in the second aspect. For beneficial effects, refer to descriptions of the second aspect. Details are not described herein again. The function may be implemented by hardware, or may be implemented by hardware executing corresponding software. The hardware or the software includes one or more modules corresponding to the foregoing function. In a possible design, a structure of the apparatus includes a receiving module, a processing module, and a sending module. These modules may perform corresponding functions of the processor in the foregoing method example in the second aspect. For details, refer to detailed descriptions in the method example. Details are not described herein again.

According to a fourth aspect, an embodiment of this application further provides a data processing unit. The data processing unit has a function of implementing behavior in the method instance in the second aspect. For beneficial effects, refer to descriptions of the second aspect. Details are not described herein again.

In a possible implementation, a structure of the data processing unit may include a processing component and a memory. The data processing unit is configured to support the data processing unit in performing a corresponding function of the data processing unit in the first aspect or the second aspect. The memory is coupled to the processing component, and the memory stores program instructions and data that are necessary for the data processing unit. The data processing unit may further include an interface, configured to communicate with another device, for example, receive a first data access request and send first data.

In another possible implementation, a structure of the data processing unit may also include a processing component and a communication interface. The processing component is configured to support the data processing unit in performing a corresponding function of the data processing unit in the first aspect or the second aspect. The processing component may further transmit data through the communication interface, for example, receive the first data access request and send the first data.

According to a fifth aspect, this application further provides a computer-readable storage medium. The computer-readable storage medium stores instructions. When the instructions are run on a computer, the computer is enabled to perform the method according to the second aspect or the possible implementations of the second aspect.

According to a sixth aspect, this application further provides a computer program product including instructions. When the instructions are run on a computer, the computer is enabled to perform the method according to the second aspect or the possible implementations of the second aspect.

According to a seventh aspect, this application further provides a computer chip. The chip is connected to a memory, and the chip is configured to read and execute a software program stored in the memory, to perform the method according to the second aspect or the possible implementations of the second aspect.

### BRIEF DESCRIPTION OF DRAWINGS

FIG. 1 is a schematic diagram of an architecture of a system according to this application;
FIG. 2 is a schematic diagram of a data access method according to this application;
FIG. 3 is a schematic diagram of a data division according to this application;
FIG. 4 is a schematic diagram of another data access method according to this application;
FIG. 5 is a schematic diagram of a structure of a data processing apparatus according to this application; and
FIG. 6 is a schematic diagram of a structure of a data processing unit according to this application.

### DESCRIPTION OF EMBODIMENTS

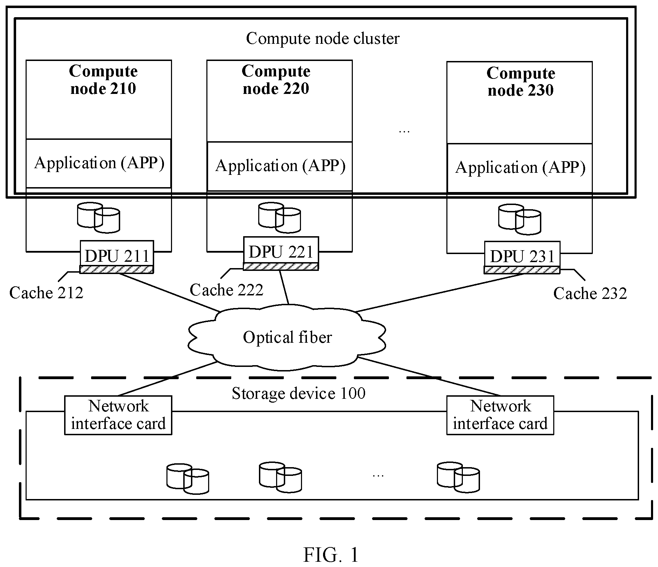

FIG. 1 is a schematic diagram of an architecture of a data system according to an embodiment of this application. The data system may include a storage device 100, at least one compute node (such as a compute node 210, a compute node 220, and a compute node 230), and at least one data processing unit (DPU). One DPU is connected to one compute node and the storage device 100. That is, there is one DPU between each compute node and the storage device 100, and the DPU is configured to establish a connection between the compute node and the storage device 100. A manner of connecting the DPU to the compute node and a manner of connecting the DPU to the storage device 100 are not limited in this embodiment of this application. For example, the DPU may be connected to the compute node through a high-speed serial computer extended bus standard (peripheral component interconnect express, PCIe). The DPU may be connected to the storage device 100 by using the Ethernet or an optical fibre bus (fibre FC). For example, the DPU may be connected to a network interface card in the storage device 100 by using the optical fiber bus.

The compute node can be deployed on a user side. An application, such as client software, can be installed on the compute node. A user triggers, by operating client software on the compute node, the compute node to generate a data access request for accessing data in the storage device 100. The DPU is used as a connection intermediary between the compute node and the storage device 100. The DPU can receive a data access request generated by the compute node and process the data access request. In this embodiment of this application, data access requests are classified into two types: one is a data access request used to read data, and the other is a data access request used to write data. For ease of description, in this embodiment of this application, the data access request used to read data is referred to as a data read request (for example, a first data read request or a second data read request). The data access request used to write data is referred to as a data write request (for example, the data write request).

A cache is disposed inside the DPU, and the cache can cache data obtained from the storage device 100. When the DPU processes the data read request, if the DPU determines that the cache inside the DPU caches data that needs to be read, the DPU may directly send the data that needs to be read to the compute node. If the DPU determines that the cache inside the DPU does not cache the data that needs to be read, the DPU may obtain the data that needs to be read from the storage device 100, send the obtained data to the compute node, or store the obtained data in the cache. When processing the data write request, the DPU may initiate a request to the storage device 100 based on the data write request. The request requests the storage device 100 to write data. For example, the DPU may send the request to the storage device 100 by using a network interface card of the storage device 100.

A quantity of compute nodes and a quantity of DPUs are not limited in this embodiment of this application. The at least one compute node may be a node in a compute node cluster. FIG. 1 shows only three compute nodes and three DPUs as an example. The three compute nodes are respectively the compute node 210, the compute node 220, and the compute node 230. The three DPUs are respectively a DPU 211, a DPU 221, and a DPU 231. The DPU 211 is connected to the compute node 210 and the storage device 100. The DPU 211 includes a cache 212. The DPU 221 is connected to the compute node 220 and the storage device 100. The DPU 221 includes a cache 222. The DPU 231 is connected to the compute node 230 and the storage device 100. The DPU 231 includes a cache 232.

In this embodiment of this application, the storage device 100 is configured to store data. A specific type of the storage device 100 is not limited in this embodiment of this application. For example, the storage device 100 may be a disk enclosure including a plurality of hard disks. For another example, the storage device 100 may be a node in a centralized storage system, or may be a node in a distributed storage system. Any device that can be used to store data may be used as the storage device 100.

In this embodiment of this application, the compute node can send the data access request to a DPU connected to the compute node. The data access request requests to access data in the storage device 100. After the DPU receives the data access request, after determining that the data is cached in the cache inside the DPU, the DPU may read data from the cache, and send the data to the compute node. In this way, when the data access request generated by the compute node is processed, data does not need to be read from the storage device 100. The DPU can directly send the data cached in the cache inside the DPU to the compute node. This effectively shortens a data access path and improves efficiency of processing the data access request.

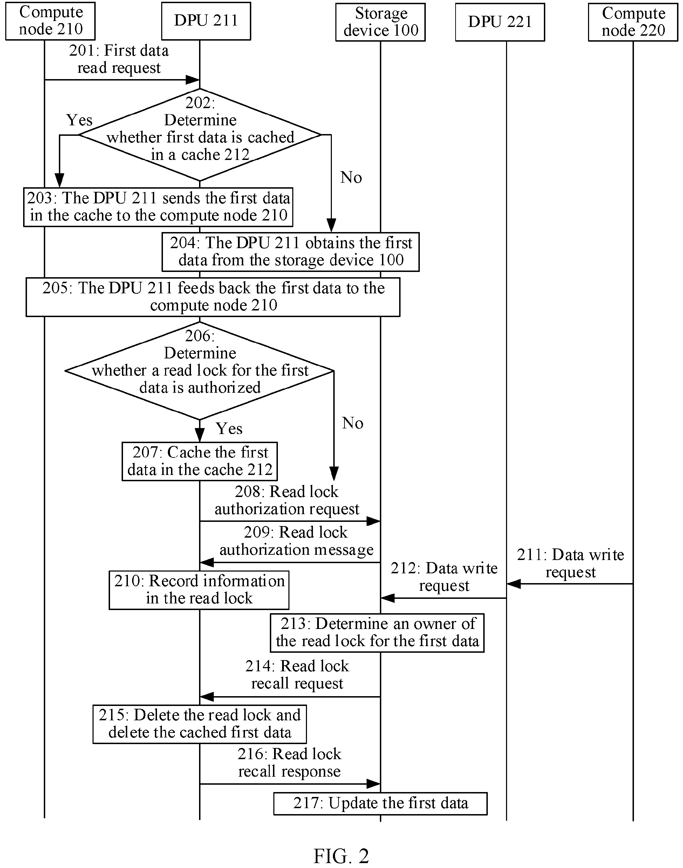

Based on the system architecture in FIG. 1, the following describes a data processing method provided in an embodiment of this application with reference to FIG. 2. The method includes the following steps.

Step 201: A compute node 210 sends a first data read request to a DPU 211. The first data read request requests to read first data in a storage device 100.

If the first data is block-level data, the first data read request may include a storage address of the first data in the storage device 100. The storage address may be a logical address of the first data, and the logical address may be a logical unit number (logical unit number, LUN), a logical block address (logical block address, LBA), and a data length.

If the first data is file-level data, the first data read request may include a file name or a file identifier of the first data in the storage device 100. The first data read request may further carry a data offset and a data length. The data offset indicates a start location of the first data in a file, and the data length indicates a data size of the first data.

If the first data is object-level data, the first data read request may include an object identifier of the first data in the storage device 100.

Step 202: The DPU 211 receives the first data read request, and determines whether the first data is cached in a cache 212 of the DPU 211. If the first data is cached in the cache 212 of the DPU 211, step 203 is performed. If the first data is not cached in the cache of the DPU 211, step 204 is performed.

If data cached in the cache 212 is block-level data, when caching data in the storage device 100, the cache 212 of the DPU 211 may store a storage address of the data in the storage device 100 and the data. When the DPU 211 determines whether the first data needs to be cached in the cache 212, the DPU 211 may determine whether the cache 212 stores the storage address of the first data. When it is determined that the cache 212 stores the storage address of the first data, it may be determined that the cache 212 caches the first data. The DPU 211 finds the first data from the cache 212 based on the storage address of the first data. Step 203 is performed. When it is determined that the cache 212 does not store the storage address of the first data, it may be determined that the cache 212 does not cache the first data, and step 204 is performed.

If data cached in the cache 212 is file-level data, when caching data in the storage device 100, the cache 212 of the DPU 211 may store a file name (or a file identifier) of the data in the storage device 100 and the data, and optionally, may further include a data offset and a data length of the data. When determining whether the first data is cached in the cache 212, the DPU 211 may determine whether the cache 212 stores the file name (or the file identifier) of the first data. Optionally, the DPU 211 may further determine whether the cache 212 stores the data offset and the data length of the first data. When it is determined that the cache 212 stores the file name (and the data offset and the data length of the first data) of the first data, it may be determined that the cache 212 caches the first data. The DPU 211 finds the first data from the cache 212 based on the file name of the first data (and the data offset and the data length of the first data). Step 203 is performed. When it is determined that the cache 212 does not store the file name of the first data, it may be determined that the cache 212 does not cache the first data, and step 204 is performed. If data cached in the cache 212 is object-level data, when caching data in the storage device 100, the cache 212 of the DPU 211 may store an object identifier of the data in the storage device 100 and the data. When the DPU 211 determines whether the first data needs to be cached in the cache 212, the DPU 211 may determine whether the cache 212 stores the object identifier of the first data. When it is determined that the cache 212 stores the object identifier of the first data, it may be determined that the cache 212 caches the first data. The DPU 211 finds the first data from the cache 212 based on the object identifier of the first data. Step 203 is performed. When it is determined that the cache 212 does not store the object identifier of the first data, it may be determined that the cache 212 does not cache the first data, and step 204 is performed.

Step 203: The DPU 211 sends the first data in the cache 212 to the compute node 210. The compute node 210 may directly obtain the first data.

In this embodiment of this application, the DPU 211 can determine data that may be accessed by the compute node 210, and cache the data. There are many manners in which the DPU 211 determines the data that may be accessed by the compute node 210. For example, the DPU 211 may determine, based on a frequency of accessing data by the compute node 210, the data that may be accessed by the compute node 210. In a specific implementation, the DPU 211 may use data whose access frequency is greater than a threshold as the data that may be accessed by the compute node 210, and cache the data in the cache 212 inside the DPU 211. For another example, the DPU 211 may use all data previously accessed by the compute node 210 as the data that may be accessed by the compute node 210, and store the data in the cache 212. In a specific implementation, when the compute node 210 accesses data for the first time, after the DPU 211 receives a data access request for accessing the data, the DPU 211 may obtain the data from the storage device 100, feed back the data to the compute node 210, and store the data in the cache 212. For another example, the data that may be accessed by the compute node 210 may be configured by a user, and the user may indicate the DPU 211 in advance to store the data in the cache 212. The foregoing manners are merely examples, and any manner in which the DPU 211 can determine the data that may be accessed by the compute node 210 is applicable to this embodiment of this application.

In this embodiment of this application, for any compute node in a data system, a DPU connected to the compute node is allowed to cache, in advance, data (for example, the first data in this embodiment of this application) that may be accessed by the compute node in a cache of the DPU. In this way, when the compute node needs to access the data, the DPU may directly feed back the data cached in the cache inside the DPU to the compute node. It can be learned that an access path used by the compute node 210 to access the first data is from the compute node 210 to the DPU 211, and the access path does not need to be extended to the storage device 100. The access path is effectively shortened, so that a delay of accessing data by the compute node can be reduced to some extent, and data access efficiency can be improved.

However, if the first data is not cached in the cache 212 of the DPU 211, the DPU 211 may perform step 204.

Step 204: The DPU 211 obtains the first data from the storage device 100.

The DPU 211 may send the first data read request to the storage device 100. After receiving the first data read request, the storage device 100 may read the first data based on information carried in the first data read request, and feed back the first data to the DPU 211.

Step 205: The DPU 211 feeds back the first data to the compute node 210.

In this embodiment of this application, because the DPU connected to the compute node in the data system may cache the data in the cache inside the DPU in advance, a plurality of DPUs in the data system cache same data. Herein, an example in which the same data cached by the plurality of DPUs is block-level data A is used. If the compute node in the data system needs to modify the data A, the DPU connected to the compute node may interact with the storage device 100 to modify the data A stored in the storage device 100, for example, modify the data A to data B. In this case, the data A cached by the plurality of DPUs is data that is not modified, and becomes invalid data or incorrect data. If a compute node connected to any one of the plurality of DPUs needs to read the data B to which the data A is modified, the compute node sends a data read request carrying a storage address of the data B (where actually, the storage address of the data B is the same as a storage address of the data A). Because the DPU already stores the data A, after the DPU receives the data read request sent by the connected compute node, the DPU directly feeds back the data A to the compute node based on the storage address of the data B. The compute node cannot accurately obtain the modified data B. It can be learned that, when the data A is modified, the data A cached by the plurality of DPUs is inconsistent with the modified data B in the storage device 100. As a result, after the data A is modified, the compute node may fail to accurately read the modified data B.

To effectively reduce occurrence of the foregoing case and ensure accuracy of accessing data by the compute node, in this embodiment of this application, the DPU connected to the compute node may apply to the storage device 100 for authorizing a distributed lock, to ensure data consistency. In this embodiment of this application, the distributed lock authorized by the storage device 100 may be configured in the DPU, and the distributed lock configured in the DPU represents a permission of the DPU on data at a specific storage location. For block-level data, the storage location herein may be a location indicated by a storage address. For file-level data, the storage location may be a location indicated by a file name (or a file identifier), a data offset, and a data length. For object-level data, the storage location may be a location indicated by an object identifier. From a perspective of a permission, there are two types of distributed locks. One type is a distributed lock representing that the DPU has a cache permission on data at a specific storage location. The DPU in which the distributed lock is configured may cache the data at the storage location in the storage device 100 in the cache inside the DPU. For ease of description, such a distributed lock may be referred to as a read lock. The other type is a distributed lock representing that the DPU has a write permission on data at a specific storage location. The DPU in which the distributed lock is configured may write the data at the storage location in the storage device 100. For ease of description, such a distributed lock may be referred to as a write lock. It should be noted that, when data has been stored at the storage location of the storage device 100, if data still needs to be written at the storage location, the data stored in the storage location is essentially updated. Therefore, in this embodiment of this application, the permission represented by the write lock may also be understood as an update permission, in other words, there is an update permission for the data at the specific storage location.

The following uses an example in which the DPU 211 applies for authorizing a read lock for the first data to describe a manner in which the DPU actively applies for authorizing the read lock in the data system. For a specific process, refer to step 206 to step 210.

Step 206: The DPU 211 determines whether the read lock for the first data is authorized. The read lock represents that the DPU 211 has a cache permission on the first data. If the authorization has been performed, step 207 is performed. If the authorization has not been performed, step 208 is performed.

The DPU 211 may record information in the distributed lock (that is, an authorized distributed lock) configured in the DPU 211. The information includes a part or all of the following:
a resource identifier of the data, the storage address of the data, an identifier of an owner (that is, the DPU 211) of the data, and a type of the distributed lock (for example, the read lock or the write lock).

A specific form of accessing data by the compute node is not limited in this application. For example, the data may be block-level data, file-level data, or object-level data. Information recorded in the distributed lock may vary with a form of the data.

### (1) Resource identifier of the data and storage address of the data

For the block-level data, the resource identifier of the data may be an identifier pre-configured for the data, and the storage address of the data may be a logical address of the data. Because the block-level data is mainly accessed by using the logical address of the data, the resource identifier of the data may not be recorded in the distributed lock.

For the file-level data, the resource identifier of the data may include a file name (or a file identifier) of the data, a data offset, and a data length. Because the file-level data may be mainly accessed by using the file name, the data offset, and the data length of the data, the storage address of the data may not be recorded in the distributed lock, or a field of the storage address of the data is set to a default value.

For the object-level data, the resource identifier of the data may be an object identifier of the data.

Because the object-level data may be mainly accessed by using the object identifier of the data, the storage address of the data may not be recorded in the distributed lock, or a field of the storage address of the data is set to a default value.

### (2) Identifier of an owner of the data

The identifier of the owner of the data may be an identifier of the DPU in which the distributed lock is located or an identifier of the compute node connected to the DPU. Any information that can uniquely identify the DPU or the compute node connected to the DPU in the data system may be used as the identifier of the owner of the data.

### (3) Type of the distributed lock

In this embodiment of this application, types of distributed locks may be classified into a read lock and a write lock. A type of the read lock may use a read (read) identifier, and a type of the write lock may use a write (write) identifier.

When determining whether the read lock for the first data is authorized, the DPU 211 may search the recorded information in the distributed lock for the storage address of the first data (corresponding to a scenario in which the first data is the block-level data), the file name of the first data (corresponding to a scenario in which the first data is the file-level data), or the object identifier of the first data (corresponding to a scenario in which the first data is the object-level data), to determine whether to record the read lock for the first data. If the DPU 211 finds the read lock for the first data from the recorded information in the distributed lock, step 207 may be performed. If the DPU 211 does not find the read lock for the first data from the recorded information in the distributed lock, it indicates that the read lock for the first data is not authorized, and step 208 may be performed.

Step 207: The DPU 211 caches the first data read from the storage device 100 in the cache 212 inside the DPU 211.

Step 208: The DPU 211 sends a read lock authorization request to the storage device 100. The read lock authorization request requests to authorize the read lock. The read lock authorization request carries information in the read lock. For the information in the read lock, refer to the foregoing descriptions. Details are not described herein again.

Step 209: After the storage device 100 receives the read lock authorization request, the storage device 100 sends a read lock authorization message to the DPU 211 after determining to agree to authorize the read lock. The read lock authorization message carries indication information. The indication information indicates agreement to authorize the read lock.

Step 210: The DPU 211 receives the read lock authorization message, and may record the information in the read lock.

After receiving the read lock authorization request, the storage device 100 needs to first determine whether the read lock can be authorized. The storage device 100 may determine, based on a state of accessing different data in the storage device 100 by the compute node in the data system, for example, a quantity of times that the compute node modifies the different data in the storage device 100 (where the quantity of times that the compute node modifies the different data in the storage device 100 may be understood as a quantity of times that data is written at different storage locations in the storage device 100), whether the read lock for the first data can be authorized. For any data stored in the storage device 100, the storage device 100 may collect statistics on quantities that the compute node in the data system reads and writes the data in a specific time period. For example, the storage device 100 may use a counting bloom filter (Counting Bloom Filter, CBF) to collect statistics on the quantities that the compute node in the data system reads and writes the data.

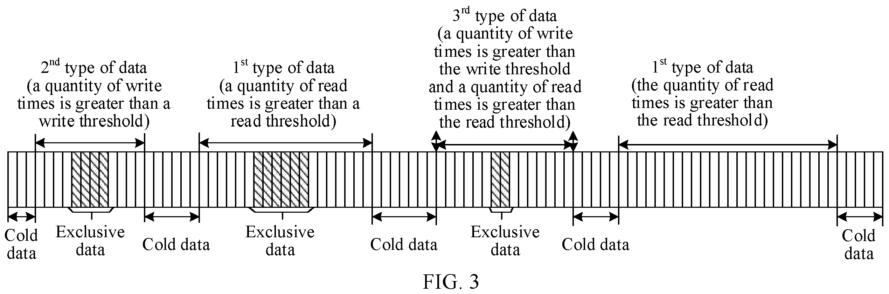

FIG. 3 is a schematic diagram of collecting statistics on a quantity of read times and a quantity of write times of the storage device 100. In FIG. 3, for example, a plurality of pieces of data in the storage device 100 are drawn and processed. The storage device 100 may divide the plurality of pieces of data based on quantities of read times and quantities of write times of the plurality of pieces of data. Herein, only four types of data are used as an example.

A 1^{st} type is data whose quantity of read times is greater than a read threshold and whose quantity of write times is equal to or close to zero. This type of data is often read and rarely modified. That a quantity of write times is close to zero means that the quantity of write times is less than a lower threshold.

A 2^{nd} type is data whose quantity of write times is greater than a write threshold and whose quantity of read times is equal to or close to zero. This type of data is often modified and rarely read. That a quantity of read times is close to zero means that the quantity of read times is less than a lower threshold.

A 3^{rd} type is data whose quantity of read times is greater than a read threshold and whose quantity of write times is greater than a write threshold. This type of data is often modified and read.

A 4^{th} type is cold data. This type of data is almost not read or modified (that is, the quantity of write times is less than a first threshold, and the quantity of read times is less than a second threshold).

For the first three types of data, exclusive data that is accessed or modified by only one compute node may be further distinguished. For such data, only one specific compute node reads or writes the data.

For the 1^{st} type of data, because the 1^{st} type of data is rarely modified, if the data is cached in a cache of a DPU, an access path of the compute node to the data may be effectively shortened, and the storage device 100 may agree to authorize a read lock for the 1^{st} type of data. Therefore, when determining that the first data to which the read lock that the DPU 211 applies for authorizing is specific belongs to the 1^{st} type of data, the storage device 100 may agree to authorize the read lock. Optionally, when the storage device 100 determines that the first data belongs to the 1^{st} type of data, if determining that data (which may be referred to as adjacent data for short in this embodiment of this application) whose storage address is adjacent to that of the first data also belongs to the first type of data, the storage device 100 may further extend a data range to which the read lock is specific, in other words, extend the first data to including the first data and the adjacent data that also belongs to the 1^{st} type of data. For example, a storage address of the data in information in the read lock may be updated to the storage address of the first data and the storage address of the adjacent data. For another example, a data offset and a data length in the information in the read lock may be extended to the storage address of the first data and the adjacent data.

When determining whether to extend the data range to which the read lock is specific or determining adjacent data that can be extended within the data range, the storage device 100 may further configure different extension policies. The extension policies may be configured based on the quantity of read/write times of the data. For example, the extension policy may indicate that when the data is written once, the data cannot be extended within the data range. For another example, the extension policy may indicate that when the data is written twice, the data cannot be extended within the data range. For another example, the extension policy may indicate that when the data is written once but is read for 10 times, the data may be extended within the data range. For another example, the extension policy may indicate that when the data is written once but is read for five times, the data may be extended within the data range. For another example, the extension policy may indicate that when the data is written once but is read for three times, the data may be extended within the data range.

If the data range to which the read lock is specific needs to be extended, the read lock authorization message sent by the storage device 100 to the DPU 211 may carry information in the read lock for which the data range is extended.

For the 2^{nd} type of data, because the data is often modified, if the data is cached in the cache of the DPU, data inconsistency may easily occur. Therefore, when determining that the first data to which the read lock that the DPU 211 applies for authorizing is specific belongs to the 2^{nd} type of data, the storage device 100 may reject authorizing the read lock.

For the 3^{rd} type of data, because the data is both read and modified, the storage device 100 may directly reject a read lock authorization request for a read lock for the 3^{rd} type of data to avoid data inconsistency. The storage device 100 may further refine the 3^{rd} type of data, and distinguish between data whose quantity of read times is greater than a quantity of write times (where for ease of description, this type of data is referred to as read hot write less data) and data whose quantity of write times is greater than a quantity of read times (where for ease of description, the data is referred to as write hot read less data).

The storage device 100 may set a corresponding threshold to distinguish between the read hot write less data and the write hot read less data. For example, the storage device 100 may use data whose quantity of read times is greater than a third threshold and whose quantity of write times is less than a fourth threshold (where the third threshold is greater than the fourth threshold) as the read hot write less data, and the storage device 100 may use data whose quantity of write times is greater than the third threshold and whose quantity of read times is less than the fourth threshold (where the third threshold is greater than the fourth threshold) as the write hot read less data. This is merely an example herein. A manner in which the storage device 100 distinguishes between the read hot write less data and the write hot read less data is not limited in this embodiment of this application.

For the read hot write less data, the storage device 100 may agree to authorize a read lock for the read hot write less data. For the write hot read less data, the storage device 100 may reject authorizing a read lock for the write hot read less data.

After determining that the read lock is agreed to be authorized, the storage device 100 may record and store information in the read lock, and send a read lock authorization message to the DPU 211. After determining that the read lock cannot be authorized, the storage device 100 may send a read lock reject message to the DPU 211, to notify the DPU 211 that the read lock cannot be authorized. In addition, for exclusive data that is accessed or modified only by the compute node 210, if the first data belongs to the exclusive data, the storage device 100 may agree to authorize the read lock for the 1^{st} type of data. If the adjacent data of the first data also belongs to the exclusive data, the storage device 100 may further extend the data range for the read lock.

It should be noted that, in the foregoing descriptions of the manner in which the storage device 100 determines whether to agree to authorize the read lock for the first data, the storage device 100 determines, based only on an access state of data at different storage locations in the storage device 100, whether to agree to authorize the read lock for the first data. In addition, the storage device 100 may further determine whether a write lock that conflicts with the read lock for the first data exists, in other words, the storage device 100 may determine whether a write lock whose data range includes all or a part of the first data exists. The write lock is the write lock that conflicts with the read lock for the first data. When it is determined that the write lock exists, the storage device 100 may not agree to authorize the read lock for the first data.

Through step 206 to step 210, the DPU 211 may actively apply to the storage device 100 for authorizing the read lock for the first data. In addition to the first data, the DPU 211 may apply to the storage device 100 for authorizing a read lock for other data in a manner similar to the foregoing manner. In addition to the DPU 211, other DPUs in the data system, such as a DPU 221 and a DPU 231, may apply to the storage device 100 for authorizing the read lock in the similar manner. A scenario in which the DPU 211 applies to the storage device 100 for authorizing the distributed lock is described in the foregoing steps. To be specific, when the DPU 211 receives the data read request from the compute node 210, and determines that the DPU 211 does not apply to the storage device 100 for authorizing the read lock for the first data, the DPU 211 may actively initiate a request to the storage device 100, to request the storage device 100 to authorize the read lock. Actually, this is only a scenario in which the DPU applies to the storage device 100 for authorizing the read lock in the data system. This embodiment of this application does not limit the scenario in which the DPU applies to the storage device 100 for authorizing the read lock. For example, the DPU may collect statistics on a frequency of accessing data in the storage device 100 by the connected compute node, and determine, based on the frequency of accessing the data in the storage device 100, data that needs to be cached (for example, data whose access frequency is greater than a threshold), and the DPU may apply to the storage device 100 for a read lock for the data that needs to be cached.

It should be noted that, in this embodiment of this application, alternatively, the storage device 100 may actively authorize the read lock to the DPU 211. For example, when the DPU 211 obtains the first data from the storage device 100, the storage device 100 may determine, based on frequency of accessing the first data, whether the first data belongs to the 1^{st} type of data or belongs to the read more write less data. After determining that the first data belongs to the 1^{st} type of data or the read more write less data, the storage device 100 may send read lock authorization information to the DPU 211. The read lock authorization information carries information in a read lock, and a data range to which the read lock is specific includes the first data. Further, when determining whether the first data belongs to the 1^{st} type of data or the read more write less data, the storage device 100 may further determine whether the adjacent data of the first data belongs to the 1^{st} type of data or the read more write less data. When determining that the first type of data and the adjacent data of the first data belong to the 1^{st} type of data or belong to the read more write less data, the storage device 100 may send read lock authorization information to the DPU 211. The read lock authorization information carries information in a read lock, and data to which the read lock is specific is the first data and the adjacent data of the first data. For another example, the storage device 100 may periodically collect statistics on a quantity of read times and a quantity of write times of data in the storage device 100. For the 1^{st} type of data or the read more write less data in the storage device 100, the storage device 100 may authorize the read lock for the 1^{st} type of data or the read more write less data for a DPU that previously reads the 1^{st} type of data or the read more write less data. Particularly, for the exclusive data, because the exclusive data is read or written by only one compute node, the storage device 100 may also actively authorize a read lock for the exclusive data for the DPU connected to the compute node.

Through step 206 to step 210, the DPU 211 successfully applies to the storage device 100 for authorizing the read lock for the first data. When the compute node in the data system needs to update the first data, setting of the distributed lock (especially the read lock) can ensure data consistency to some extent. For a specific implementation process, refer to step 211 to step 217. In step 211 to step 217, an example in which a compute node 220 requests to update the first data is used for description.

Step 211: The compute node 220 sends a data write request to the DPU 221. The data write request requests to update the first data. In step 211, updating the first data may be understood as writing new data at the storage location of the first data. The new data is used to replace the first data.

If the first data is the block-level data, the data write request may include the storage address of the first data and data that needs to be written. The storage address may be the logical address of the first data.

If the first data is the file-level data, the first data read request may include the file name (or the file identifier), the data offset, and the data length of the first data, and a new file that needs to be written.

If the first data is the object-level data, the first data read request may include the object identifier of the first data and a new object that needs to be written.

Step 212: After receiving the data write request, the DPU 221 may send the data write request to the storage device 100, to request the storage device 100 to update the first data.

Step 213: After receiving the data write request, the storage device 100 determines an owner of the read lock for the first data or an owner of the write lock for the first data in the data system. In this embodiment of this application, the owner of the read lock for the first data is the DPU 211, and no write lock for the first data exists in a storage system.

Step 214: The storage device 100 may send a read lock recall request message to an owner (that is, the DPU 211) of a read lock for the first data that has a conflict. The read lock recall request message is used to recall the read lock. Recalling the read lock refers to deleting information in the read lock and deleting data to which the read lock is specific in the cache. The read lock recall request carries the information in the read lock. The read lock for the first data that has the conflict is a read lock for the first data that is authorized by the DPU other than the DPU 221.

Step 215: After receiving the read lock recall request, the DPU 211 determines a read lock that needs to be recalled, deletes the read lock, and deletes, from the cache 212, data (that is, the first data) to which the read lock is specific.

Step 216: The DPU 211 sends a read lock recall response to the storage device 100. The read lock recall response indicates the deleted read lock.

In this embodiment of this application, because the owner of the read lock for the first data is only the DPU 211, the storage device 100 only needs to send the read lock recall request to the DPU 211. If the owner of the read lock for the first data includes another DPU in addition to the DPU 211, the storage device 100 and the another DPU may also recall the read lock in a manner similar to that in step 213 to step 216. If there is an authorized read lock for the first data in the DPU 221, because the read lock for the first data in the DPU 221 is not the read lock that has the conflict, the storage device 100 does not need to recall the read lock in the manner in step 213 to step 216.

In addition, although the write lock for the first data does not exist in the storage system in step 213, during actual application, if the write lock for the first data exists in the storage system, and the owner of the write lock is another DPU other than the DPU 211, the write lock may also be considered as a write lock that has a conflict, and the storage device 100 and the another DPU may also recall the write lock in the manner similar to that in step 213 to step 216.

Step 217: After the storage device 100 receives the read lock recall response, the storage device 100 may continue to process the data write request, and update the first data based on the data write request.

If the first data is the block-level data, the storage device 100 may write the data that needs to be written at the storage address of the first data.

If the first data is the file-level data, the storage device 100 may update the file indicated by the file name (or the file identifier), the data length, and the data offset to the new file that needs to be written.

If the first data is the object-level data, the storage device 100 may update the object indicated by the object identifier to the new object that needs to be written.

It can be learned from the foregoing steps that, when the compute node in the data system modifies the first data, the storage device 100 may recall the authorized read lock for the first data in the DPU 211, and invalidate the first data in the cache 212 in the DPU 211. In this way, it can be ensured that data in the cache 212 of the DPU 211 is consistent with the data in the storage device 100, in other words, data consistency can be effectively ensured. Then, when the compute node 210 connected to the DPU 211 needs to read modified data again, because the first data cached in the cache 212 of the DPU 211 is invalid, the DPU 211 cannot feed back the data in the cache 212 to the compute node 210, but needs to read the modified data from the storage device 100. In this way, it can be ensured that the compute node 210 can accurately read the data. This ensures validity of data access.

In the foregoing steps, that the DPU 211 applies for authorizing the read lock for the first data is described. It can be learned from descriptions of the distributed lock that, in addition to the read lock, the distributed lock further includes the write lock. In this embodiment of this application, the DPU is allowed to actively apply to the storage device 100 for authorizing the write lock. The following describes a manner of authorizing the write lock.

The embodiment shown in FIG. 2 is still used as an example. In step 210, after the DPU 221 receives the data write request, the DPU 221 may also send a write lock authorization request to the storage device 100. The write lock authorization request requests to authorize the write lock. The write lock represents that the DPU 221 has an update permission on the first data. That the DPU 221 has an update permission on the first data may also be understood as that the DPU 221 has a write permission on the storage location of the first data in the storage device 100. In other words, the DPU 221 can write at the storage location of the first data.

After receiving the write authorization request, the storage device 100 may directly agree to authorize the write lock, and send a write lock authorization message to the DPU 221.

After receiving the write lock authorization request, the DPU 221 may record the write lock, and cache the modified data in the cache.

After the DPU 221 authorizes the write lock for the first data, if the compute node 220 further needs to modify the first data (that is, write at the storage location of the first data again) later, the DPU 221 has authorized the write lock for the first data. If the DPU 221 does not obtain the first data, the DPU 221 may first obtain the first data, and update the first data. If the DPU 221 has cached the first data in the cache 222, the DPU 221 may directly update the first data cached in the cache 222, and send, to the storage device 100, a data write request re-initiated by the compute node 220. The DPU 221 no longer needs to wait for the storage device 100 to recall the read lock for the first data, but may directly modify the cached first data.

It should be noted that, a scenario in which the DPU 221 applies to the storage device 100 for authorizing the distributed lock is described in the foregoing steps. To be specific, when the DPU 221 receives the data write request from the compute node 220, and determines that the DPU 221 does not apply to the storage device 100 for authorizing the write lock for the first data, the DPU 221 may actively initiate a request to the storage device 100, to request the storage device 100 to authorize the write lock. Actually, this is only a scenario in which the DPU applies to the storage device 100 for authorizing the write lock in the data system. This embodiment of this application does not limit the scenario in which the DPU applies to the storage device 100 for authorizing the write lock. For example, the DPU may collect statistics on a frequency of updating data in the storage device 100 by the connected compute node, and determine, based on the frequency of updating the data in the storage device 100, data that needs to be updated (for example, data whose update frequency is greater than a threshold), and the DPU may apply to the storage device 100 for a write lock for the data.

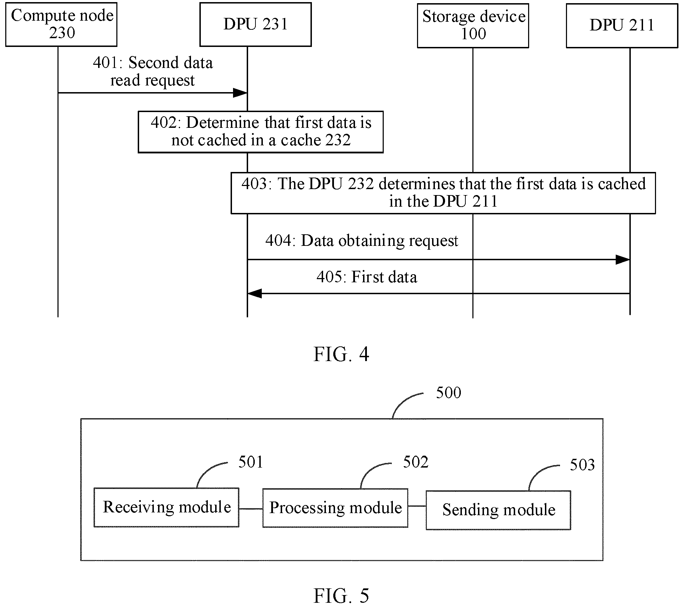

In the foregoing content, a manner in which the compute node 210 accesses the first data, a manner in which the DPU 211 applies for authorizing the read lock for the first data, and a manner in which the DPU 211 applies for authorizing the write lock for the first data are described. It can be learned from the foregoing content that, in the data system, the DPU connected to the compute node may cache the data. In this way, if the data that needs to be accessed by the compute node is cached in the cache of the DPU, efficiency of accessing the data by the compute node can be improved to some extent. To further improve data access efficiency in the data system, the cache of the DPU in the data system may form a global cache, and the DPUs may communicate with each other to exchange the data. Interaction between the DPU 231 and the DPU 211 is used as an example below, and a DPU interaction manner is described with reference to FIG. 4. The method includes the following steps.

Step 401: A compute node 230 sends a second data read request to a DPU 231. The second data read request requests to read first data in a storage device 100. Information carried in the second data read request is similar to that carried in a first data read request. For details, refer to the foregoing content. Details are not described herein again.

Step 402: After receiving the second data read request, the DPU 231 determines that the first data is not cached in a cache 232 of the DPU 231.

Step 403: The DPU 231 determines that the first data is cached in a DPU 211.

There are many manners in which the DPU 231 determines that the first data is cached in a cache 212 of the DPU 211. The following lists two of the manners.

Manner 1: The DPU 231 determines, by interacting with the storage device 100, that the first data is cached in the cache 212 of the DPU 211.

The DPU 231 may send the second data read request to the storage device 100. After receiving the second data read request, the storage device 100 queries recorded information in a read lock, and determines that an owner of the read lock for the first data is the DPU 211, in other words, the DPU 211 may cache the first data. The storage device 100 may notify the DPU 231 that the first data is cached in the DPU 211, and may notify the DPU 231 to obtain the first data from the DPU 211.

Manner 2: The DPU 231 stores data caching layout information. The data caching layout information is used to record a location at which the data is cached in the storage device 100, in other words, the data caching layout information is used to record a DPU in which the data is cached in the storage device 100. The DPU 231 determines, based on the data caching layout information, that the first data is cached in the cache 212 of the DPU 211.

The data caching layout information may be sent by the storage device 100 to each DPU. For example, the storage device 100 may generate the data caching layout information based on information in an authorized read lock. The data caching layout information may include a part or all of the information in the read lock. For example, the data caching layout information may include a storage address of the data and an owner of the data. For another example, the data caching layout information may include a resource identifier of the data and an owner of the data. The storage device 100 may send the data caching layout information to a DPU in a data system. Certainly, the storage device 100 may alternatively update the data caching layout information after the read lock is recalled or a new read lock is authorized. The storage device 100 may send updated data caching layout information to a DPU in a data system.

The data caching layout information may alternatively be formed through interaction between DPUs. For example, in the data system, the DPUs may notify each other of information in authorized read locks in the DPUs. In this way, a DPU in the data system may obtain information in an authorized read lock in another DPU, and then generate the data caching layout information based on the information in the authorized read lock in the another DPU.

Step 404: The DPU 231 sends a data obtaining request to the DPU 211. The data obtaining request requests to obtain the first data, and the data obtaining request may carry a storage address of the first data, a file identifier (or a file name) of the first data, or an object identifier of the first data. Step 405: After receiving the data obtaining request, the DPU 211 may obtain the first data cached in the cache 212, and feed back the first data to the DPU 231.

Based on a same inventive concept as the method embodiments, an embodiment of this application further provides a data processing apparatus. The data processing apparatus may be deployed on a DPU (for example, a DPU 211, a DPU 221, or a DPU 231), and is configured to perform the methods performed by the DPU 211, the DPU 221, and the DPU 231 in the method embodiments in FIG. 2 and FIG. 4. For related features, refer to the foregoing method embodiments. Details are not described herein again. As shown in FIG. 5, the data processing apparatus 500 includes a receiving module 501, a processing module 502, and a sending module 503.

The receiving module 501 is configured to receive a first data access request sent by a compute node. The first data access request is used to access first data in a storage device.

The processing module 502 is configured to determine that the first data is cached in a cache of a DPU.

The sending module 503 is configured to send the first data in the cache to the compute node.

In a possible implementation, the data processing apparatus 500 may cache the first data before receiving the first data access request. For example, before receiving the first data access request, the receiving module 501 may further receive a second data access request sent by the compute node. The second data access request is used to access the first data in the storage device. After the receiving module 501 receives the second data access request, the processing module 502 may obtain the first data from the storage device based on the second data access request. After obtaining the first data, the processing module 502 may cache the first data in the cache of the DPU. The sending module 503 may send the first data to the compute node.

In a possible implementation, the sending module 503 may further send a first lock request to the storage device. The first lock request requests a first distributed lock, and the first distributed lock represents that the DPU has a cache permission on the first data. The receiving module 501 may obtain the first distributed lock from the storage device. After the receiving module 501 obtains the first distributed lock from the storage device, the processing module 502 may cache the first data in the cache of the DPU.

In a possible implementation, in addition to accessing the first data, the compute node may further request to update the first data. There are two manners in which the compute node updates the first data:

### Manner 1: The storage device updates the first data.

The receiving module 501 may receive a third data access request from the compute node. The third data access request is used to update the first data; and the sending module 503 may request, based on the third data access request, the storage device to update the first data.

Manner 2: The DPU updates the first data itself.

The sending module 503 may send a second lock request to the storage device. The second lock request requests a second distributed lock, and the second distributed lock represents that the DPU has an update permission on the first data. After obtaining the second distributed lock from the storage device, the receiving module 501 may receive a fourth data access request from the compute node. The fourth data access request is used to update the first data. The processing module 502 may update the first data based on the fourth data access request.

In a possible implementation, the processing module 502 may delete the first distributed lock and delete cached first data based on an indication of the storage device.

In a possible implementation, the processing module 502 may send the first data to another DPU at a request of the another DPU.

It should be noted that, in embodiments of this application, module division is an example, and is merely a logical function division. During actual implementation, another division manner may be used. Functional modules in embodiments of this application may be integrated into one processing module, or each of the modules may exist alone physically, or two or more modules are integrated into one module. The integrated module may be implemented in a form of hardware, or may be implemented in a form of a software functional module.

All or a part of the foregoing embodiments may be implemented by software, hardware, firmware, or any combination thereof. When software is used to implement embodiments, the foregoing embodiments may be implemented completely or partially in a form of a computer program product. The computer program product includes one or more computer instructions. When the computer program instructions are loaded or executed on a computer, the procedure or functions according to embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid state drive (solid state drive, SSD).

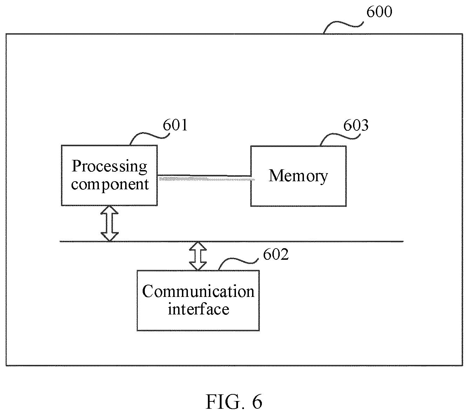

In a simple embodiment, a person skilled in the art may figure out that the DPU (for example, the DPU 211, the DPU 221, and the DPU 231) in the embodiment in FIG. 2 or FIG. 4 may use the form in FIG. 6.

A data processing unit 600 in FIG. 6 includes at least one processing component 601 and a communication interface 602. Optionally, a memory 603 may be further included. The data processing component is configured to perform the method performed by each data processing unit (such as the DPU 211, the DPU 221, and the DPU 231) in the method embodiments in FIG. 2 and FIG. 4.

The processing component 601 may be an application-specific integrated circuit (application-specific integrated circuit, ASIC), a field-programmable gate array (field-programmable gate array, FPGA), or another programmable logic device, a discrete gate or a transistor logic device, a discrete hardware component, an artificial intelligence chip, an on-chip chip, or the like. The general-purpose processor may be a microprocessor, any conventional processor, or the like. The memory 603 may be a volatile memory such as a random access memory. Alternatively, the memory may be a non-volatile memory such as a read-only memory, a flash memory, a hard disk drive (hard disk drive, HDD), or a solid-state drive (solid-state drive, SSD). Alternatively, the memory 603 is any other medium that can be used to carry or store expected program code in a form of instructions or a data structure and that can be accessed by a computer. However, this is not limited. The memory 603 may be a combination of the foregoing memories.

This embodiment of this application does not limit a specific connection medium between the processing component 601 and the memory 603.

When the data processing unit is in the form in FIG. 6, the processing component 601 in FIG. 6 may invoke a computer-executable instruction stored in the memory 603, so that the data processing unit can perform the method performed by the DPU according to any one of the foregoing method embodiments. The processing component 601 in FIG. 6 may also enable, by using the computer-executable instruction burnt on the processing component 601, the data processing unit to perform the method performed by the DPU according to any one of the foregoing method embodiments.

Specifically, all functions/implementation processes of the receiving module 501, the processing module 502, and the sending module 503 in FIG. 5 may be implemented by the processing component 601 in FIG. 6 by invoking the computer-executable instruction stored in the memory 603, or implemented by running a computer-executable instruction burnt in the processing component 601. Alternatively, functions/implementation processes of the processing module 502 in FIG. 5 may be implemented by the processing component 601 in FIG. 6 by invoking the computer-executable instruction stored in the memory 602 or by running a computer-executable instruction burnt in the processing component 601, and functions/implementation processes of the receiving module 501 or the sending module 503 in FIG. 5 may be implemented through the communication interface 602 in FIG. 6.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can direct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

Clearly, a person skilled in the art can make various modifications and variations to this application without departing from the scope of this application. This application is intended to cover these modifications and variations of this application provided that they fall within the scope of protection defined by the following claims and their equivalent technologies.

## Claims

1. A data system, wherein the system comprises a first compute node, a storage device, and a first data processing unit DPU, and the first DPU is separately connected to the first compute node and the storage device; and
the first DPU is configured to:
receive a first data access request sent by the first compute node, wherein the first data access request is used to access first data in the storage device;
determine that the first data is cached in a cache of the first DPU; and
send the first data in the cache to the first compute node.

2. The system according to claim 1, wherein before receiving the first data access request, the first DPU is further configured to:
receive a second data access request sent by the first compute node, wherein the second data access request is used to access the first data in the storage device;
obtain the first data from the storage device based on the second data access request; and
cache the first data in the cache of the first DPU.

3. The system according to claim 2, wherein the first DPU is further configured to:
send a first lock request to the storage device, wherein the first lock request requests a first distributed lock, and the first distributed lock represents that the first DPU has a cache permission on the first data;
the storage device is configured to authorize the first distributed lock for the first DPU in response to the first lock request; and
the first DPU is configured to: after obtaining the first distributed lock, cache the first data in the cache of the first DPU.

4. The system according to claim 3, wherein the data system further comprises a second compute node and a second DPU, and the second DPU is separately connected to the second compute node and the storage device;
the second DPU is configured to: receive a third data access request from the second compute node, wherein the third data access request is used to update the first data; and request, based on the third data access request, the storage device to update the first data; and
the storage device is further configured to recall the first distributed lock of the first DPU, and update the first data based on a request of the second DPU.

5. The system according to claim 3, wherein the data system further comprises a second compute node and a second DPU, and the second DPU is separately connected to the second compute node and the storage device;
the second DPU is further configured to send a second lock request to the storage device, wherein the second lock request requests a second distributed lock, and the second distributed lock represents that the second DPU has an update permission on the first data;
the storage device is configured to authorize the second distributed lock for the second DPU in response to the second lock request; and
the second DPU is further configured to:
receive a fourth data access request from the second compute node, wherein the fourth data access request is used to update the first data; and
obtain the first data from the storage device based on the second distributed lock, and update the first data based on the fourth data access request.

6. The system according to any one of claims 1 to 5, wherein the data system further comprises a third compute node and a third DPU, and the third DPU is separately connected to the third compute node and the storage device; and
the third DPU is configured to: receive a fifth data access request sent by the third compute node, wherein the fifth data access request is used to access the first data in the storage device; and
after it is determined that the first data is stored in the cache of the first DPU, obtain the first data from the first DPU.

7. A data access method, wherein the method is performed by a data processing unit DPU, the DPU is connected to a compute node and a storage device, and the method comprises:
receiving a first data access request sent by the compute node, wherein the first data access request is used to access first data in the storage device;
determining that the first data is cached in a cache of the DPU; and
sending the first data in the cache to the compute node.

8. The method according to claim 7, wherein before the receiving a first data access request, the method further comprises:
receiving a second data access request sent by the compute node, wherein the second data access request is used to access the first data in the storage device;
obtaining the first data from the storage device based on the second data access request; and
caching the first data in the cache of the DPU.

9. The method according to claim 8, wherein the method further comprises:
sending a first lock request to the storage device, wherein the first lock request requests a first distributed lock, and the first distributed lock represents that the DPU has a cache permission on the first data; and
after the first distributed lock is obtained from the storage device, caching the first data in the cache of the DPU.

10. The method according to claim 9, wherein the method further comprises:
receiving a third data access request from the compute node, wherein the third data access request is used to update the first data; and
requesting, based on the third data access request, the storage device to update the first data.

11. The method according to claim 7 or 8, wherein the method further comprises:
deleting the first distributed lock and deleting the cached first data based on an indication of the storage device.

12. The method according to claim 9, wherein the method further comprises:
sending a second lock request to the storage device, wherein the second lock request requests a second distributed lock, and the second distributed lock represents that the DPU has an update permission on the first data;
after the second distributed lock is obtained from the storage device, receiving a fourth data access request from the compute node, wherein the fourth data access request is used to update the first data; and
updating the cached first data based on the fourth data access request.

13. The method according to any one of claims 7 to 12, wherein the method further comprises:
sending the first data to another DPU at a request of the another DPU.

14. A data processing apparatus, wherein the apparatus is connected to a compute node and a storage device, and the apparatus comprises:
a receiving module, configured to receive a first data access request sent by the compute node, wherein the first data access request is used to access first data in the storage device;
a processing module, configured to determine that the first data is cached in a cache of a DPU; and
a sending module, configured to send the first data in the cache to the compute node.

15. The apparatus according to claim 14, wherein
the receiving module is further configured to receive a second data access request sent by the compute node, wherein the second data access request is used to access the first data in the storage device; and
the processing module is further configured to obtain the first data from the storage device based on the second data access request, and cache the first data in the cache of the DPU.

16. The apparatus according to claim 15, wherein
the sending module is further configured to send a first lock request to the storage device, wherein the first lock request requests a first distributed lock, and the first distributed lock represents that the DPU has a cache permission on the first data;
the receiving module is further configured to obtain the first distributed lock from the storage device; and
the processing module is further configured to: after the receiving module obtains the first distributed lock from the storage device, cache the first data in the cache of the DPU.

17. The apparatus according to claim 16, wherein
the receiving module is further configured to receive a third data access request from the compute node, wherein the third data access request is used to update the first data; and
the sending module is further configured to request, based on the third data access request, the storage device to update the first data.

18. The apparatus according to claim 14 or 15, wherein the processing module is further configured to delete the first distributed lock and delete the cached first data based on an indication of the storage device.

19. The apparatus according to claim 16, wherein
the sending module is further configured to send a second lock request to the storage device, wherein the second lock request requests a second distributed lock, and the second distributed lock represents that the DPU has an update permission on the first data;
the receiving module is further configured to receive a fourth data access request from the compute node, wherein the fourth data access request is used to update the first data; and
the processing module is further configured to update the cached first data based on the second distributed lock and based on the fourth data access request.

20. The apparatus according to any one of claims 14 to 19, wherein the processing module is further configured to send the first data to another DPU at a request of the another DPU.

21. A data processing unit, wherein the data processing unit comprises a processing component and a communication interface, the processing component is configured to perform the method according to any one of claims 7 to 13, and the communication interface is configured to perform data transmission when triggered by the processing component.

22. A computer-readable storage medium, wherein the computer-readable storage medium stores instructions, and when the instructions are run on a computer, the computer is enabled to perform the method according to any one of claims 7 to 13.
